(19) Europäisches Patentamt / European Patent Office / Office européen des brevets

(11) **EP 2 985 733 A1**

(12) **DEMANDE DE BREVET EUROPEEN**

(43) Date de publication:
**17.02.2016 Bulletin 2016/07**

(51) Int Cl.:
*G06T 7/00* (2006.01)      *G06T 11/00* (2006.01)

(21) Numéro de dépôt: **15175913.1**

(22) Date de dépôt: **08.07.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **23.07.2014 FR 1457099**

(71) Demandeur: **COMMISSARIAT A L'ENERGIE ATOMIQUE ET AUX ENERGIES ALTERNATIVES 75015 Paris (FR)**

(72) Inventeurs:
- **BUYENS, Fanny**
  **78640 SAINT GERMAIN LA GRANGE (FR)**
- **SEVESTRE-GHALILA, Sylvie**
  **92400 COURBEVOIE (FR)**
- **CAZASNOVES, Antony**
  **75014 PARIS (FR)**

(74) Mandataire: **Lopez, Frédérique et al Marks & Clerk France Immeuble Visium 22 Avenue Aristide Briand 94117 Arcueil Cedex (FR)**

(54) **PROCEDE, DISPOSITIF ET PRODUIT PROGRAMME D'ORDINATEUR DE DISCRETISATION D'UN ESPACE 3D**

(57)      La présente invention concerne un procédé et un dispositif de discrétisation volumique d'un espace 3D à partir de vues 2D d'un objet, le procédé comprenant les étapes de générer pour chaque vue 2D une image de bords labellisés représentative des bords contenus dans chaque vue, de fusionner l'ensemble des images de bords labellisés en un nuage de points 3D, et de générer une grille irrégulière 3D à partir du nuage de points 3D, la grille constituant une discrétisation volumique de l'espace 3D adaptée à l'objet.

<u>100</u>

```
┌──────────────────────────┐
│   Réception 'n' vues 2D  │──── 102
└──────────────────────────┘
              │
              ▼
┌──────────────────────────┐
│   Génération 'n' images  │──── 104
│    de bords labellisés   │
└──────────────────────────┘
              │
              ▼
┌──────────────────────────┐
│  Fusion 'n' images en    │──── 106
│    nuage de points 3D    │
└──────────────────────────┘
              │
              ▼
┌──────────────────────────┐
│  Génération grille       │──── 108
│    irrégulière 3D        │
└──────────────────────────┘
              │
              ▼
┌──────────────────────────┐
│  Vers reconstruction 3D  │──── 110
└──────────────────────────┘
```

**FIG.1**

EP 2 985 733 A1

## Description

### Domaine de l'invention

L'invention porte sur un procédé, un dispositif et un produit programme d'ordinateur pour la discrétisation d'un espace 3D à partir de vues 2D d'un objet.

### Etat de la Technique

La reconstruction 3D est un problème dit de type inverse pour lequel un volume 3D est estimé à partir d'un ensemble de vues 2D d'un objet étudié.

Classiquement, les méthodes de reconstruction 3D sont basées sur une représentation du volume de reconstruction en une grille régulière d'éléments cubiques appelés voxels. Le principal désavantage d'une telle représentation réside dans des coûts calculatoires conséquents même si il peut être recouru à du calcul parallélisé. En effet, pour obtenir une bonne représentation des contours des objets il est nécessaire d'échantillonner finement la grille voxélisée, ce qui conduit par ailleurs à sur-échantillonner des zones pourtant homogènes du volume.

De plus, le coût en termes de mémoire de stockage des données 3D est d'autant plus élevé que l'échantillonnage du volume est fin.

Dans le cadre plus spécifique de la tomographie, l'exploitation d'un objet reconstruit se limite à sa visualisation pseudo 3D (par coupes 2D). L'accès à des informations plus pertinentes permettant de caractériser l'objet de façon quantitative passe nécessairement par une étape de post-traitement comme de la segmentation.

Il existe quelques méthodes de reconstruction basées sur une discrétisation adaptée à l'objet, comme par exemple, celles décrites dans les articles suivants :

- Jovan G. Brankov Yongyi Yang, M. N., "Tomographic Image Reconstruction Based on a Content-Adaptive Mesh Model", IEEE Transactions on Medical Imaging, 2004, 202-212;
- Arkadiusz Sitek, Ronald H. Huesman, G. T. G., "Tomographic Reconstruction Using an Adaptive Tetrahedral Mesh Defined by a Point Cloud", IEEE Transactions on Medical Imaging, 2006, 25*;*
- Michele A. Quinto, Dominique Houzet and Fanny Buyens, "Adaptive Triangular Mesh Image Representation for X-ray Tomographic Reconstruction", EEE Nuclear Science Symposium, Medical Imaging Conference, Anaheim, Californie : États-Unis (2012)

L'article de Brankov présente une méthode de reconstruction SPECT 2D sur une grille adaptative, générée par triangulation de Delaunay, à partir de projections 1 D de l'objet à reconstruire en coupe. Le maillage de reconstruction est obtenu à partir de noeuds placés par une méthode dite « content-adaptive mesh model » (CAMM). Au préalable, l'approche nécessite une étape de reconstruction 2D pixélisée basse résolution de la coupe par méthode dite « Filtered Back Projection » (FBP) qui requiert un grand nombre de projections. Même si une extension 3D de cette méthode pourrait être envisagée, permettant de diminuer l'espace mémoire de stockage de la reconstruction, les limitations de reconstruction liées au temps de calcul et au nombre de projections demeurent.

L'article de Sitek décrit une méthode de reconstruction SPECT 3D sur une grille tétraédrique. Le procédé consiste à raffiner une grille initialement régulière par alternance de reconstructions itératives-mises à jour de la grille (par ajout de noeuds) jusqu'à convergence quand un nombre maximum de noeuds est atteint. Le nombre de vues utilisées peut être diminué mais les limites en termes de temps de calcul demeurent. Par ailleurs, l'obtention de la grille se base sur des critères issus d'une reconstruction.

L'article de Quinto propose une méthode de reconstruction 3D sur grille adaptée, avec mailles tétraédriques. La méthode repose sur une initialisation d'une grille 3D quelconque puis procède par alternance de reconstructions itératives-segmentation par ensemble de niveaux (ou level set en anglais) sur le volume reconstruit pour la mise à jour de la grille 3D. L'information mise à jour est de type contour ce qui permet d'adapter rapidement la grille à son contenu et de réduire les temps de calcul. L'information contour émanant des reconstructions 3D, un premier problème associé est que l'accès à cette information nécessite une alternance d'étapes de reconstruction / segmentation qui sont coûteuses en termes de temps de calcul. Un second problème vient du fait que l'information contour repose sur les données reconstruites et l'expose donc aux artéfacts associés.

Il existe alors le besoin d'une solution qui palie aux inconvénients des approches connues. La présente invention répond à ce besoin.

### Résumé de l'invention

Un objet de la présente invention est de proposer une solution avantageuse en termes de réduction du temps de calcul grâce à une méthode d'échantillonnage d'un volume 3D de reconstruction adapté à son contenu en utilisant un échantillonnage irrégulier. La méthode est aussi avantageuse en termes de stockage mémoire de par la discrétisation proposée.

L'invention tire avantage de l'information structurelle qui est présente dans les vues 2D d'un objet à reconstruire pour réaliser une initialisation adaptée d'une grille 3D.

Grâce à l'échantillonnage réalisé (nuage de points), la méthode permet d'obtenir directement un modèle volumique ou surfacique 3D d'un objet sans aucune reconstruction volumique. La méthode utilise les vues 2D de l'objet à reconstruire pour placer un nuage de points spécifique à sa complexité dans l'espace de reconstruction 3D par méthode statistique dans le contexte d'une géométrie d'acquisition connue. Cette méthode comprend deux étapes. Une première étape de tests statistiques est appliquée sur les données de contours 2D rétro-projetées en 3D pour fusionner l'information en un nuage de points 3D. Dans la seconde étape, une grille irrégulière d'élément structurant quelconque est construite à partir du nuage de points, discrétisant l'objet en un faible nombre de cellules. Le champ scalaire associé à l'objet est estimé à l'aide d'un algorithme de reconstruction adapté à l'élément structurant de la grille. Cette discrétisation 3D permet de réduire considérablement d'une part la taille du fichier contenant l'objet reconstruit et d'autre part le temps de calcul inhérent à l'algorithmique de reconstruction.

Avantageusement, l'invention s'implémentera dans le domaine industriel : reverse engineering, données pour imprimantes 3D, contrôles de pièces manufacturées (CND) avec un modèle CAO d'origine, création de modèle CAO d'objets spécifiques pour des codes de calcul de type éléments finis (calculs mécaniques, fluidiques, etc). Elle trouvera aussi avantage dans le domaine médical pour l'aide au diagnostic spécifique patient et plus particulièrement pour le suivi de pathologies orthopédiques, la planification de chirurgie osseuse, les applications angiographiques, et également pour le dossier patient puisque cette représentation 3D est peu couteuse en stockage mémoire.

Pour obtenir les résultats recherchés, un procédé mis en oeuvre par ordinateur, un dispositif comprenant des moyens pour mettre en oeuvre le procédé, et un produit programme d'ordinateur sont proposés.

En particulier, un procédé de discrétisation volumique d'un espace 3D à partir de vues 2D d'un objet, comprend les étapes de :

- générer pour chaque vue 2D une image de bords labellisés, ladite image étant représentative des bords contenus dans ladite chaque vue ;

- fusionner l'ensemble des images de bords labellisés en un nuage de points 3D ; et

- générer une grille irrégulière 3D à partir du nuage de points 3D, ladite grille constituant une discrétisation volumique de l'espace 3D adaptée audit objet.

Dans un mode de réalisation, la grille irrégulière 3D est volumique, et le procédé comprend de plus après l'étape de génération de la grille volumique, une étape de reconstruction tomographique de l'objet à l'aide d'un algorithme itératif. Dans une implémentation, l'étape de génération de la grille irrégulière 3D consiste en une tétraédrisation. Dans une implémentation préférentielle, la tétraédrisation est de type Delaunay contraint.

Dans un autre mode de réalisation, la grille irrégulière 3D est surfacique constituant une représentation surfacique de l'objet.

Dans une implémentation préférentielle, l'étape de génération d'images de bords labellisés est réalisée avec un détecteur de bords de Canny.

Dans un mode de réalisation, l'étape de fusion des images de bords labellisés comprend une étape de rétroprojection desdites images de bords en valeurs rétroprojetées dans un espace de reconstruction échantillonné sur une grille régulière de voxels. Dans une implémentation, le procédé comprend de plus une étape de modélisation des valeurs rétroprojetées, par une loi de Poisson tronquée ou par une loi de Poisson.

Selon un mode de réalisation, le procédé comprend une étape de filtrage des valeurs rétroprojetées qui sont supérieures à un seuil obtenu par l'étape de modélisation. Dans une implémentation, la grille irrégulière 3D est générée à partir des valeurs rétroprojetées filtrées.

Avantageusement, dans une implémentation préférentielle, le nombre de vues 2D de l'objet est de l'ordre d'une trentaine de vues.

L'invention couvre aussi un dispositif de discrétisation volumique d'un espace 3D à partir de vues 2D d'un objet qui comprend des moyens pour mettre en oeuvre les étapes du procédé.

L'invention peut opérer sous la forme d'un produit programme d'ordinateur qui comprend des instructions de code permettant d'effectuer les étapes du procédé revendiqué lorsque le programme est exécuté sur un ordinateur.

**Description des figures**

Différents aspects et avantages de l'invention vont apparaitre en appui de la description d'un mode préféré d'implémentation de l'invention mais non limitatif, avec référence aux figures ci-dessous :

La figure 1 illustre un enchainement des étapes du procédé de discrétisation dans un mode de réalisation de l'invention ;

Les figures 2a et 2b illustrent des exemples de vue 2D d'un objet à reconstruire selon le procédé de l'invention ;

Les figures 3a et 3b illustrent des exemples d'images de bords obtenues pour les vues des figures 2a et 2b selon une mise en oeuvre du procédé de l'invention ;

Les figures 4a à 4c illustrent un exemple de nuage de points sous différents angles, obtenu selon une mise en oeuvre du procédé de l'invention ;

Les figures 5a à 5d illustrent un exemple de grille irrégulière 3D sous différentes coupes, obtenue selon une mise en oeuvre du procédé de l'invention ;

Les figures 6a à 6c illustrent sous différentes coupes, un exemple de reconstruction tomographique 3D de l'objet des figures 2a et 2b selon une mise en oeuvre du procédé de l'invention ;

La figure 7 illustre un exemple de reconstruction surfacique selon une mise en oeuvre du procédé de l'invention.

**Description détaillée de l'invention**

D'une manière générale, la présente invention a pour but de réduire la taille réservée au stockage d'un volume 3D sans affecter son contenu. Cet objectif nécessite de n'associer qu'un nombre faible de cellules de représentation 3D aux zones homogènes. Pour adapter au mieux la discrétisation à un objet imagé, il faut positionner les bords des cellules uniquement sur les contours des zones homogènes du volume.

Le principe de l'invention est de considérer que l'information structurelle 3D, c'est-à-dire l'information de contours ou de bords, est présente de façon incomplète dans les données brutes 2D, et s'appuyant sur le fait que tout bord d'une vue 2D correspond à une projection géométrique d'un contour d'un volume 3D, l'invention permet de localiser l'information contour dans les vues 2D, puis de la fusionner pour placer les noeuds d'une grille adaptée sur les contours 3D de l'objet étudié. Ainsi l'échantillonnage 3D obtenu s'affranchit de toute étape de reconstruction. Les gains en termes de temps de calcul sont conséquents.

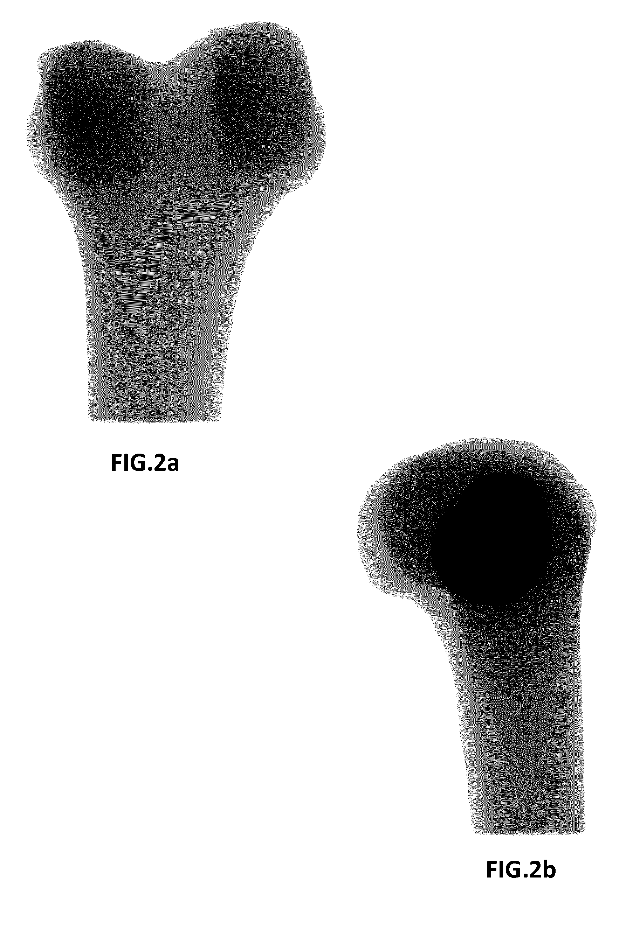

Dans la suite de la description, le procédé de discrétisation est illustré en références aux figures 2 à 7 pour une reconstruction 3D issue de la tomographie par rayons X.

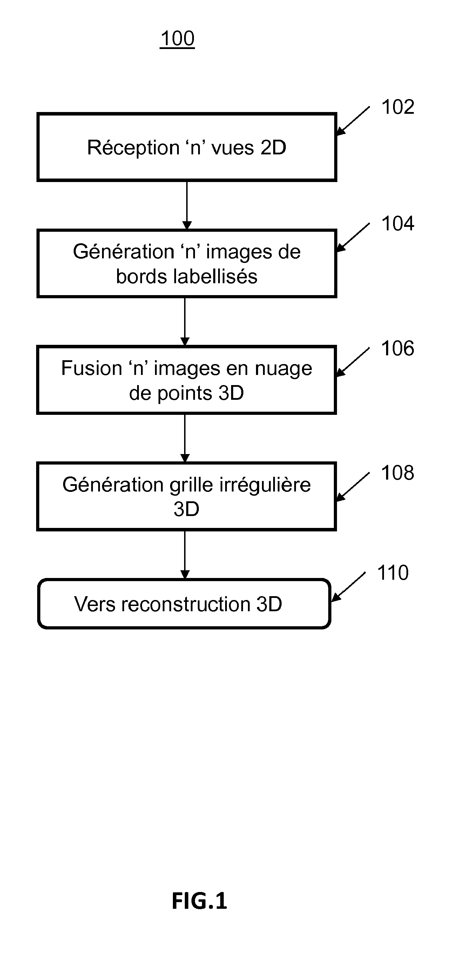

Référence est d'abord faite à la figure 1 qui montre un enchainement des étapes du procédé de discrétisation dans un mode de réalisation de l'invention. Le procédé débute après la réception (102) d'un nombre 'n' de vues 2D d'un objet. Les vues 2D peuvent être acquises depuis un système physique ou par simulation à l'aide d'un logiciel adéquat. Avantageusement, la présente invention permet la reconstruction 3D d'un objet à partir d'un faible nombre de vues 2D initiales. Ainsi, dans un mode préférentiel, une trentaine de vues 2D sont suffisantes pour opérer le procédé de l'invention. Les figures 2a et 2b illustrent deux vues 2D d'un objet « os ».

Comme énoncé précédemment, le principe de l'invention est de caractériser l'information structurelle d'intérêt sachant que la structure d'un volume 3D à reconstruire est portée par l'ensemble des interfaces entre matériaux. Or, les discontinuités 3D caractérisant la structure d'un objet sont présentes dans une version dégradée - 2D - sur l'ensemble des vues 2D de ce dernier. Par conséquent, à partir des discontinuités présentes dans l'ensemble des vues prises depuis différents angles il est possible de retrouver la distribution 3D des points de l'espace dont elles sont issues.

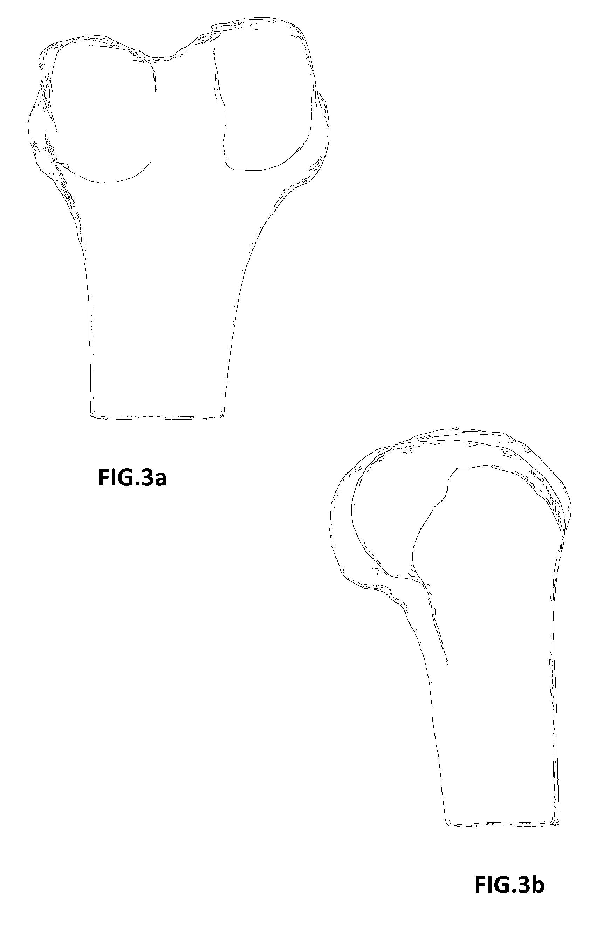

Pour obtenir l'information structurelle recherchée, les 'n' vues 2D sont filtrées par un détecteur de bords. Ainsi, les bords sont détectés et labellisés dans chaque vue 2D, et une image de bords labellisés est générée (104) pour chaque vue. Les figures 3a et 3b illustrent des images de bords obtenues à partir des vues des figures 2a et 2b.

Dans un mode de réalisation, l'étape de détection de bords est réalisée avec un détecteur de bords de Canny. L'homme de l'art trouvera les détails de ce type de détecteur, par exemple à la référence « A Computational Approach to Edge Detection, » Canny J., IEEE Transactions on Pattern Analysis and Machine Intelligence, 1986, 6.

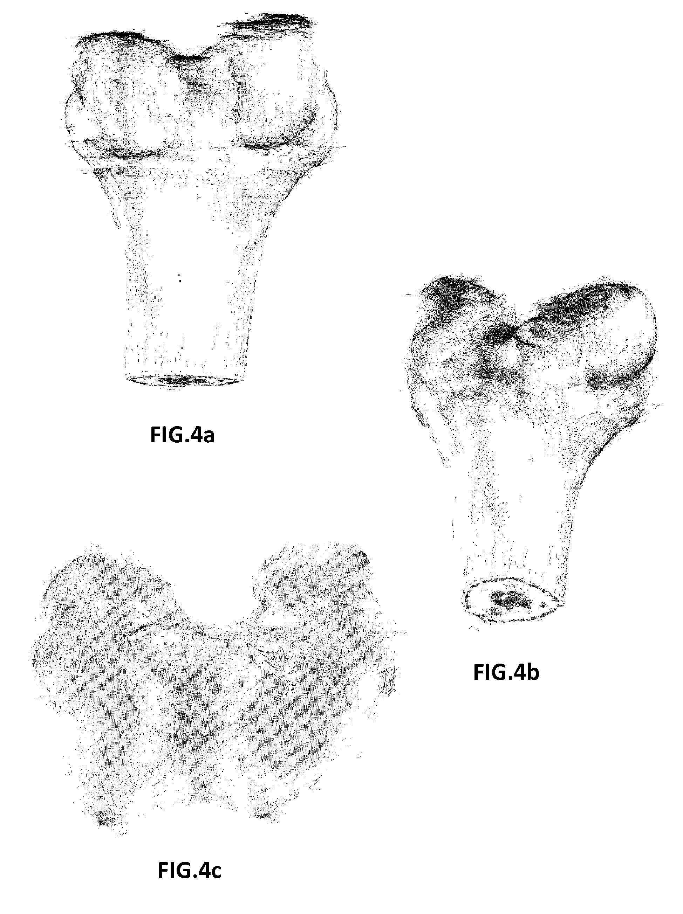

Quand toutes les 'n' vues ont été filtrées, le procédé passe à une étape suivante (106) qui consiste à fusionner en 3D les 'n' images de bords pour obtenir un nuage de points 3D. Les figures 4a à 4c illustrent un nuage de point sous différents angles, obtenu par la fusion des images des figures 3a et 3b.

Dans une implémentation préférentielle, la fusion consiste en une rétroprojection simple des images de bords dans un espace de reconstruction, échantillonné sur une grille régulière de voxels. Chaque voxel contient alors le décompte du nombre de bords qui lui est associé par projection dans les vues 2D filtrées, et les fortes valeurs correspondent aux points les plus représentatifs des contours 3D.

Avantageusement, pour échantillonner l'objet étudié de façon adaptée, les points les plus représentatifs sont sélectionnés par tests statistiques, et cela requiert de connaître la distribution suivie par les valeurs du volume. La modélisation classiquement utilisée pour caractériser de tels phénomènes de comptage est la loi de Poisson. Cependant, en fusionnant des images de bords, de nombreux voxels de l'espace de reconstruction possèdent une valeur nulle. Ces voxels sont écartés de l'analyse. Ceci conduit à faire la modélisation sur les voxels restants par une loi de Poisson tronquée.

L'estimation du paramètre $\tilde{\delta}$ caractéristique de cette loi est faite à l'aide de l'estimateur de Plackett (R.F Tate, R.L. Goen, Minimum variance unbiased estimation for the truncated Poisson distribution, The annals of Mathematical Statistics, 1958) à partir de l'observation des valeurs $X_i$, $i = 1, ...,n$ des voxels comme suit :

$$\tilde{\delta} = \frac{T}{n}\left(1 - \frac{N_1}{T}\right)$$

où $T = \sum_{i=0}^{N} X_i$

et $N_1 = \left(\sum_{i=0}^{N} X_i | X_i = 1\right).$

Une fois le paramètre de la loi de Poisson tronquée estimé, cette loi est utilisée pour réaliser le seuillage des valeurs fusionnées à l'aide d'un test statistique permettant de sélectionner les grandes valeurs du comptage qui sont considérées comme des voxels représentatifs de bord 3D.

Dans un mode de réalisation, les hypothèses suivantes sont prises pour le test statistique :

$H_0$ : $X_i$ *n'est pas une valeur extrème pour la loi de Poisson tronquée en* 0
$H_1$ : $X_i$ *est valeur extrème pour la loi de Poisson tronquée en* 0

On décide de $H_1$ si la valeur du voxel dépasse un seuil 's' choisi, selon la théorie des tests, par le quantile $Q$ de la loi de Poisson tronquée, tel que :

$$s = Q_{tronquée}(1 - \alpha)$$

où $\alpha$ est le niveau du test utilisé généralement choisi dans la gamme [0,05 - 0,001] suivant la permissivité souhaitée de la sélection.
Pour déterminer le quantile $Q_{tronquée}$ d'ordre 1 - $\alpha$, de manière préférentielle on utilise la méthode de Gilchrist (Gilchrist, Warren. Statistical modelling with quantile functions. CRC Press, 2000, p.149) qui approxime ce quantile par celui de la loi de Poisson de paramètre $\lambda$ pour un ordre (1 - $\alpha'$) comme suit :

$$(1 - \alpha') = F(1) - (1 - \alpha)(1 - F(1))$$

où F correspond à la fonction de répartition de la loi de Poisson de paramètre $\lambda$. Ce paramètre est calculé en utilisant l'estimation empirique de la moyenne des données (estimation optimale au sens du maximum de vraisemblance).
La valeur de seuillage a ainsi pour valeur :

$$s = Q(1 - \alpha')$$

Pour chaque voxel de la grille portant une valeur supérieure au seuil considéré, un noeud est placé dans un repère cartésien. La grille irrégulière est bâtie sur le nuage de points ainsi obtenu.
Dans le cas particulier d'un faible nombre de vues 2D acquises par un système en rotation autour d'un axe unique, les bords situés dans des plans aux deux directions perpendiculaires à l'axe de rotation provoquent une forte variation de la distribution d'un plan à l'autre le long de l'axe de rotation. Ce phénomène lié à la rétroprojection est pris en charge en traitant chaque plan tour à tour et en incluant la possibilité de modéliser les valeurs de comptage par une loi de Poisson. Ceci conduit à déterminer sur chaque plan du volume 3D la nature de la loi de Poisson (standard ou tronquée), et le paramètre associé.
La loi est déterminée par un test de sous-dispersion proposé par Mizere et al (Mizere D., Kokonendji C.C., Dossou-Gbété S., Quelques alternatives de la loi de Poisson contre des alternatives générales basées sur l'indice de dispersion de Fisher, Rev. Statistique Appliquée, LIV(4), 61-84, 2006).
La dispersion d'une distribution est définie comme le ratio entre la variance et la moyenne de cette dernière. Les hypothèses du test sont les suivantes :

$H_0$ : $X_i$ *suit une loi de Poisson*
$H_1$ : $X_i$ *suit une loi sous dispersée (Poisson tronquée ici)*

Dans le cadre de ce test, seules les valeurs rétro-projetées $X_i$ non nulles sont considérées.
La statistique de test $T_F$ s'exprime par :

$$T_F = n \frac{S_n^2}{\overline{X_n}}$$

où $n$ correspond au cardinal de l'échantillon du plan considéré et les quantités $\overline{X_n}$ et $S_n^2$ sont calculés depuis les échantillons $X_i$ comme suit :

$$\overline{X_n} = \frac{1}{n} \sum_{i=1}^{n} X_i$$

$$S_n^2 = \frac{1}{n-1} \sum_{i=1}^{n} (X_i - \overline{X_n})^2$$

En introduisant le quantile d'ordre $\alpha$ du Khi-deux à n-1 degrés de liberté $\chi_{n-1,\alpha}^2$ , l'hypothèse $H_0$ est rejetée si la statistique de test vérifie l'équation suivante :

$$T_F < \chi_{n-1,\alpha}^2$$

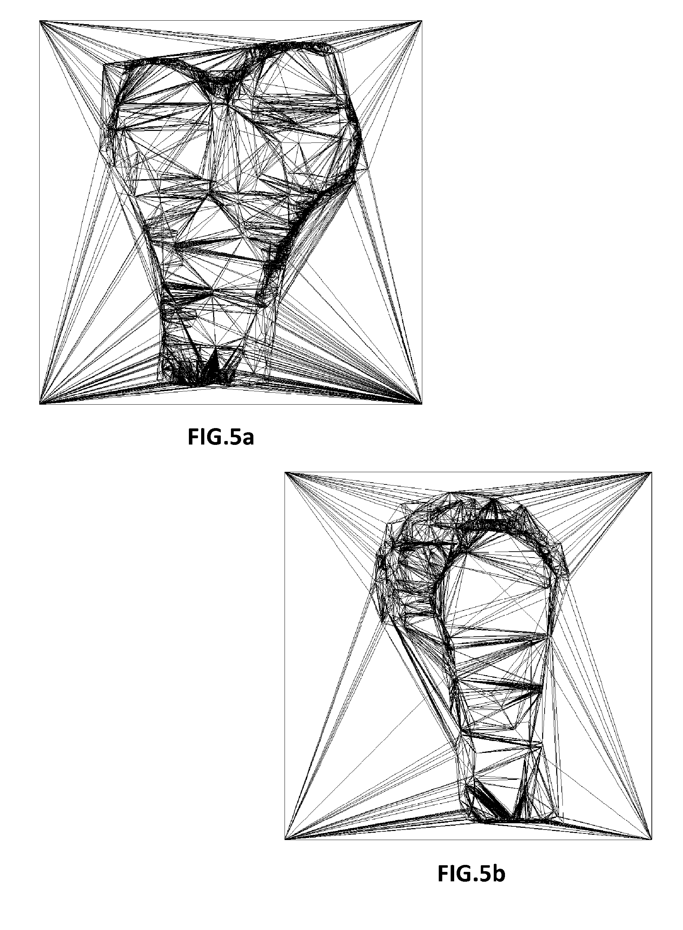

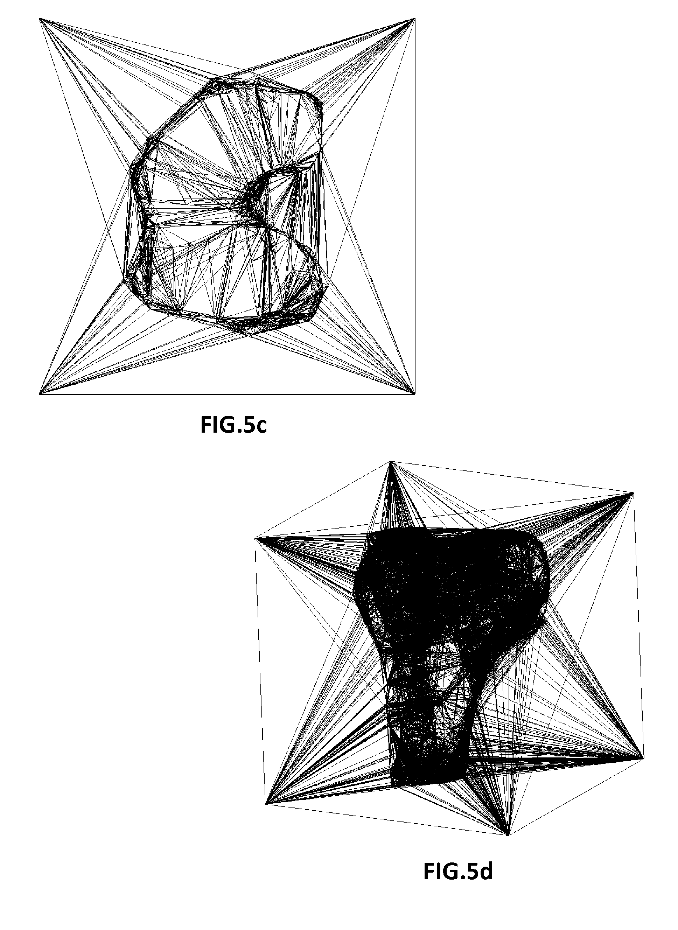

Le choix de la bonne loi étant crucial pour l'obtention d'un seuillage pertinent, le niveau de sélectivité est fixé de manière préférentielle à $\alpha$ = 0,001.
Dans le cas où l'hypothèse $H_0$ est retenue, la tranche est caractérisée par une distribution de Poisson dont le paramètre est calculé en utilisant l'estimation empirique de la moyenne des données (estimation optimale au sens du maximum de vraisemblance). Dans l'alternative, la tranche est modélisée par une loi de Poisson tronquée comme vu ci-avant et dont le paramètre est estimé par la méthode de Plackett.
Après l'obtention du nuage de points 3D, le procédé poursuit par une étape de génération d'une grille irrégulière 3D (108). Les figures 5a à 5d illustrent selon différentes coupes des exemples d'une grille irrégulière 3D obtenue à partir du nuage de points illustré sur les figures 4a à 4c.

Dans une version test, l'ensemble des opérations de traitement de rétroprojection et de la création du maillage est effectué en 35 secondes sur un configurateur de test de caractéristiques Intel Xeon E31245 (3.3 Ghz), 8 Go RAM, GPU Tesla C2075. L'objet reconstruit peut être produit sous la forme d'un fichier « gmsh ».

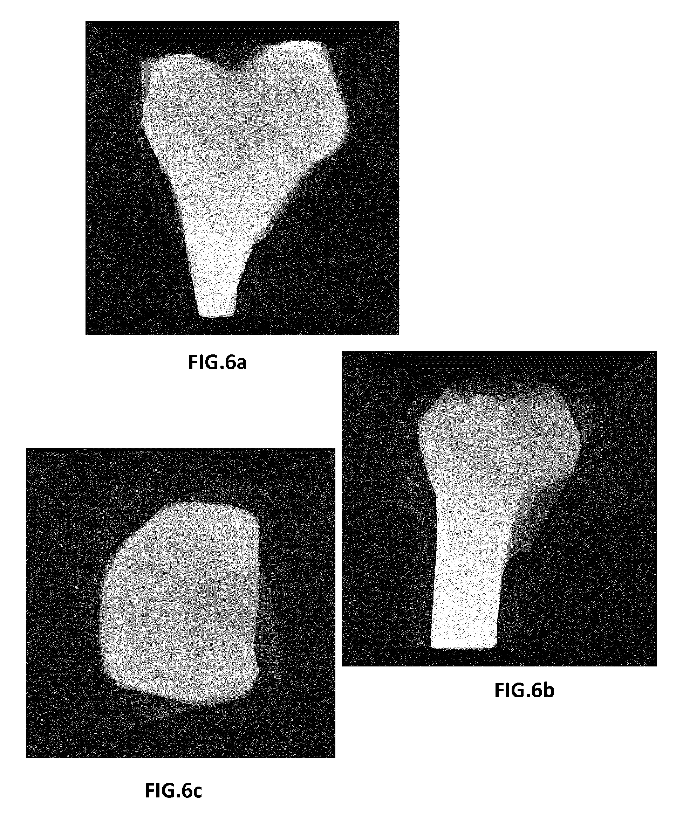

Dans une implémentation, la grille irrégulière 3D est volumique. Le procédé permet alors après l'étape de génération de ladite grille volumique, d'effectuer une reconstruction tomographique de l'objet initial, à l'aide d'un algorithme itératif. Les figures 6a à 6c illustrent sous différentes coupes selon des axes x, y, z, un exemple de reconstruction tomographique 3D de l'objet des figures 2a et 2b.

Dans une variante d'implémentation, l'étape de génération de la grille irrégulière 3D consiste en une tétraédrisation, qui peut être une tétraédrisation de type Delaunay contraint.

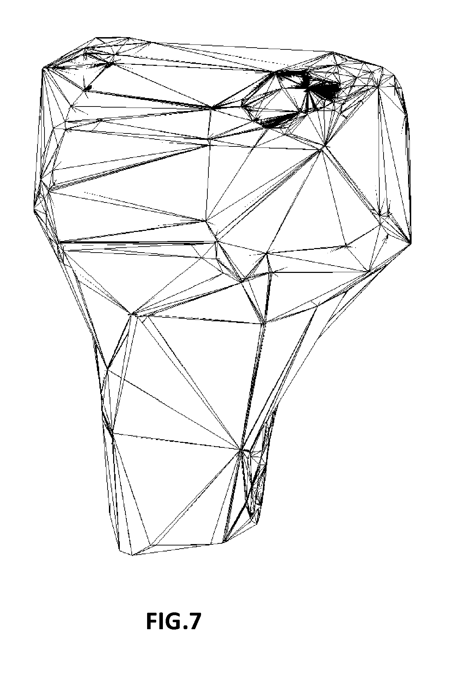

Dans un mode de réalisation, la grille irrégulière 3D est surfacique et constitue une représentation surfacique de l'objet, telle qu'illustrée sur la figure 7. La grille irrégulière surfacique 3D peut être obtenue par une approche de type alpha-shape. La surface externe de l'objet reconstruit peut être générée sous la forme d'un fichier « STL ».

Selon les applications, un modèle CAO de l'objet peut être généré à partir du nuage de points sous la forme d'un fichier STL.

Ainsi, les avantages de la présente invention résident essentiellement (1) dans l'obtention d'une grille irrégulière 3D adaptée, par approche statistique qui ne nécessite qu'un nombre restreint de données ou vues 2D, (2) dans l'échantillonnage de l'espace de reconstruction directement adapté au contenu 3D sans reconstruction préalable ou parallèle.

Le procédé décrit permet d'échantillonner un volume de reconstruction initial selon la structure de l'objet imagé, à partir de ses vues 2D sans procédé itératif. Par ailleurs, le procédé permet de réduire l'espace de stockage en mémoire du volume reconstruit et de diminuer les temps de calculs pour la reconstruction volumique.

Dans le domaine médical, le procédé permet ainsi de, diminuer le temps d'utilisation des équipements, augmentant par là-même leur disponibilité, la méthode étant adaptée à l'utilisation d'un faible nombre de projections en tomographie.

Pour les applications tomographiques, le procédé permet d'accéder à une reconstruction en niveaux de gris tel qu'usuellement utilisée en milieux médical et industriel, accompagnée du volume 3D surfacique de l'objet étudié aboutissant à une visualisation simple et rapide sans traitement supplémentaire.

L'homme du métier considérera que la présente invention peut s'implémenter à partir d'éléments matériel et/ou logiciel et opérer sur un ordinateur, un tel ordinateur comprenant des moyens permettant d'opérer les étapes du procédé. L'invention peut être disponible en tant que produit programme d'ordinateur sur un support lisible par un ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk- Read/Write (CD-R/W) et DVD).

**Revendications**

1. Un procédé, mis en oeuvre par ordinateur, de discrétisation volumique d'un espace 3D à partir de vues 2D d'un objet, le procédé comprenant les étapes de :

   - générer pour chaque vue 2D une image de bords labellisés, chaque image étant représentative des bords contenus dans ladite chaque vue ;
   - fusionner l'ensemble desdites images de bords labellisés en un nuage de points 3D ; et
   - générer une grille irrégulière 3D à partir du nuage de points 3D, ladite grille constituant une discrétisation volumique de l'espace 3D adaptée audit objet.

2. Le procédé selon la revendication 1, dans lequel la grille irrégulière 3D est volumique, et le procédé comprenant de plus après l'étape de génération de ladite grille volumique, une étape de reconstruction tomographique dudit objet à l'aide d'un algorithme itératif.

3. Le procédé selon les revendications 1 ou 2 dans lequel l'étape de génération de la grille irrégulière 3D consiste en une tétraédrisation.

4. Le procédé selon la revendication 3 dans lequel la tétraédrisation est de type Delaunay contraint.

5. Le procédé selon la revendication 1 dans lequel la grille irrégulière 3D est surfacique constituant une représentation surfacique de l'objet.

6. Le procédé selon l'une quelconque des revendications 1 à 5 dans lequel l'étape de génération d'images de bords labellisés est réalisée avec un détecteur de bords de Canny.

7. Le procédé selon l'une quelconque des revendications 1 à 6 dans lequel l'étape de fusion des images de bords labellisés comprend une étape de rétroprojection desdites images de bords en valeurs rétroprojetées dans un espace de reconstruction échantillonné sur une grille régulière de voxels.

**8.** Le procédé selon la revendication 7 comprenant de plus une étape de modélisation des valeurs rétroprojetées, par une loi de Poisson tronquée ou par une loi de Poisson.

**9.** Le procédé selon la revendication 8 comprenant de plus une étape de filtrage des valeurs rétroprojetées qui sont supérieures à un seuil obtenu par l'étape de modélisation.

**10.** Le procédé selon la revendication 9 dans lequel la grille irrégulière 3D est générée à partir des valeurs rétroprojetées filtrées.

**11.** Le procédé selon l'une quelconque des revendications 1 à 10 dans lequel le nombre de vues 2D est de l'ordre d'une trentaine de vues.

**12.** Un dispositif de discrétisation volumique d'un espace 3D à partir de vues 2D d'un objet, le dispositif comprenant des moyens pour mettre en oeuvre les étapes du procédé selon l'une quelconque des revendications 1 à 11.

**13.** Un produit programme d'ordinateur, ledit programme d'ordinateur comprenant des instructions de code permettant d'effectuer les étapes du procédé selon l'une quelconque des revendications 1 à 11, lorsque ledit programme est exécuté sur un ordinateur.

100

Réception 'n' vues 2D — 102

↓

Génération 'n' images de bords labellisés — 104

↓

Fusion 'n' images en nuage de points 3D — 106

↓

Génération grille irrégulière 3D — 108

↓

Vers reconstruction 3D — 110

**FIG.1**

**FIG.2a**

**FIG.2b**

**FIG.3a**

**FIG.3b**

FIG.4a

FIG.4b

FIG.4c

**FIG.5a**

**FIG.5b**

FIG.5c

FIG.5d

FIG.6a

FIG.6b

FIG.6c

FIG.7

Europäisches
Patentamt

European
Patent Office

Office européen
des brevets

# RAPPORT DE RECHERCHE EUROPEENNE

Numéro de la demande

EP 15 17 5913

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Sonia Akkoul Berkache: "Reconstruction 3D surfacique du fémur proximaî a partir de quelques radiographies", PhD Thesis, 4 décembre 2013 (2013-12-04), pages 1-189, XP055190650, Université d'Orléans Extrait de l'Internet: URL:https://hal.inria.fr/tel-01124277/document [extrait le 2015-05-20] | 1,3-13 | INV. G06T7/00 G06T11/00 |
| Y | * page 7 * <br> * page 82 * <br> * page 85 - page 88 * <br> * page 96 - page 101 * <br> * page 105 - page 113 * <br> * page 138 * <br> * page 120 * <br> ----- | 2 | |
| Y,D | BRANKOV J G ET AL: "Tomographic Image Reconstruction Based on a Content-Adaptive Mesh Model", IEEE TRANSACTIONS ON MEDICAL IMAGING, IEEE SERVICE CENTER, PISCATAWAY, NJ, US, vol. 23, no. 2, 1 février 2004 (2004-02-01), pages 202-212, XP011106355, ISSN: 0278-0062, DOI: 10.1109/TMI.2003.822822 | 2 | DOMAINES TECHNIQUES RECHERCHES (IPC) <br><br> G06T |
| A | * page 204, colonne 2 - page 205, colonne 1 * <br> ----- <br><br> -/-- | 1,3-13 | |

Le présent rapport a été établi pour toutes les revendications

| Lieu de la recherche | Date d'achèvement de la recherche | Examinateur |
|---|---|---|
| Munich | 18 décembre 2015 | Millet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 15 17 5913

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MICHELE A QUINTO ET AL: "Adaptive Triangular Mesh Image Representation for X-ray Tomographic Reconstruction", IEEE NUCLEAR SCIENCE SYMPOSIUM, MEDICAL IMAGING CONFERENCE, ANAHEIM, CA, USA,, 14 décembre 2012 (2012-12-14), page 4pp, XP009170760, * le document en entier * ----- | 1-13 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 18 décembre 2015 | Millet, Christophe |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

......................................................................................
& : membre de la même famille, document correspondant

EPO FORM 1503 03.82 (P04C02)

**EP 2 985 733 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JOVAN G. BRANKOV ; YONGYI YANG, M. N.** Tomographic Image Reconstruction Based on a Content-Adaptive Mesh Model. *IEEE Transactions on Medical Imaging,* 2004, 202-212
- **ARKADIUSZ SITEK, RONALD H. ; HUESMAN, G. T. G.** Tomographic Reconstruction Using an Adaptive Tetrahedral Mesh Defined by a Point Cloud. *IEEE Transactions on Medical Imaging,* 2006, 25
- **MICHELE A. QUINTO ; DOMINIQUE HOUZET ; FANNY BUYENS.** Adaptive Triangular Mesh Image Representation for X-ray Tomographic Reconstruction. *EEE Nuclear Science Symposium, Medical Imaging Conference,* 2012
- **CANNY J.** A Computational Approach to Edge Detection. *IEEE Transactions on Pattern Analysis and Machine Intelligence,* 1986, 6
- Minimum variance unbiaised estimation for the truncated Poisson distribution. **R.F TATE ; R.L. GOEN.** The annals of Mathematical Statistics. 1958
- **GILCHRIST, WARREN.** Statistical modelling with quantile functions. CRC Press, 2000, 149
- **MIZERE D. ; KOKONENDJI C.C. ; DOS-SOU-GBÉTÉ S.** Quelques alternatives de la loi de Poisson contre des alternatives générales basées sur l'indice de dispersion de Fisher. *Rev. Statistique Appliquée,* 2006, vol. LIV (4), 61-84